# EUROPEAN PATENT APPLICATION

(11) **EP 1 770 487 A2**
(43) Date of publication of application: **04.04.2007**
(21) Application number: 06011239.8
(22) Date of filing: 31.05.2006
(51) Int. Cl.: G06F 3/042

(54) **Graphic signal display apparatus and method for hand-held terminal**

(30) Priority: 29.09.2005 KR 20050091246
(71) Applicant: LG Electronics Inc., Yongdungpo-Gu Seoul 150-010 (KR)
(72) Inventor: Yoon, Jason Jeongsuk, Gangnam-gu Seoul 135-080 (KR)
(74) Representative: Beyer, Andreas

(57) **Abstract**

A method and apparatus is disclosed wherein a graphic signal is moved and displayed on a screen of a hand-held terminal according to movement of the hand-held terminal If the graphic signal is displayed on the screen, a camera integrally disposed in the hand-held terminal photographs a predetermined object. Feature points of the object are extracted from an image photographed by the camera, and the feature points are utilized to detect a movement of the camera. The graphic signal is moved, enlarged, scaled down or rotated for display on the screen according to the movement of the detected object. Accordingly, the graphic signal can be scrolled, enlarged, scaled down or rotated simply by the movement of the hand-held terminal, thereby precluding a user from the inconvenience of manipulating the graphic signal every time the user intends to display the graphic signal.

## Description

### CROSS-REFERENCE TO RELATED APPLICATIONS

This application is based upon and claims the benefit of priority from the prior Korean Patent Application No. 10-2005-0091246, filed on September 29, 2005, the entire contents of which is incorporated herein by reference.

### BACKGROUND OF THE INVENTION

### Field of the Invention

The present document relates to a graphic signal display apparatus and method for a hand-held terminal. More particularly, the present invention relates to graphic signal display apparatus and method for a hand-held terminal configured to scroll, zoom-in, zoom-out or rotate 3-D (three dimensional) graphic signals, web texts and various graphic signals displayed on a screen by various hand-held terminals including mobile communication terminals and personal digital assistants (PDAs) according to movement thereof.

### Description of the Related Art

Along with a great stride developed in the field of information communication, the communication environment has recently encountered sudden changes. Particularly, use of easy-to-hand-carry mobile terminals such as hand-held mobile phones and PDAs has increased. Moreover, concomitant with increase in use of hand-held mobile terminals, various new serviceable functions for providing convenience to users have gained popularity and development of these functions are progressing.

The hand-held terminals can be used for games, transmission and receipt of messages, various text services including storage of data, receipt of weather information and stock information in addition to telephone communications. Furthermore, the hand-held terminals may be integrally equipped with cameras for photographing a predetermined object and the photographed object can be viewed and checked via a screen. As bandwidth of the hand-held terminals is expanded, the hand-held terminals can be wirelessly connected to the Internet to obtain a lot of information, and the amount of information that can be obtained in real time has dramatically increased.

As the receiving functions of hand-held terminals are diversified, graphics to be displayed on a screen of a hand-held terminal has also diversified. However, due to the constraint that the hand-held terminal must be conveniently hand-carried, the size of a screen of the hand-held terminal on which a predetermined graphic signal is displayed is limited to a few inches at the most.

If display sizes of graphic signals are larger than the size of a screen, it is almost impossible to display all the graphic signals on one screen. To address this problem, a scroll bar may be displayed at an appropriate location of the screen such as a right side or a lower side of the screen in the conventional hand-held terminal. A user utilizes a key pad or a stylus to move the scroll bar horizontally left or right and vertically up or down, thereby enabling the hand-held terminal to move the graphic signal displayed on the screen to the left, right, up or down. However, there is a disadvantage in the conventional technique in that a user must adjust the scroll bar by way of a key pad or a stylus thereby, increasing inconvenience and making use of related functions cumbersome to a user.

Therefore, there is a need for a method and apparatus for moving a graphic signal displayed on the screen of a hand-held terminal to the left, right, up or down without the user having to adjust a scroll bar. The present invention addresses this and other needs.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

One object of the present invention is to provide a graphic signal display apparatus and method for a hand-held terminal configured to automatically scroll, zoom-in, zoom-out, rotate or move a graphic signal displayed on a screen of the hand-held terminal in response to movement of the hand-held terminal. Another object of the present invention is to provide a graphic signal display apparatus and method for a hand-held terminal configured to photograph an object using a camera integrally mounted on the hand-held terminal, detect movement of the hand-held terminal based upon movement of the photographed object and enable functions such as scroll, zoom-in, zoom-out, rotate or move with respect to a graphic signal displayed on a screen of the hand-held terminal.

If a graphic signal is displayed on a screen of the present invention, a camera is used to photograph on object. Feature points of the object are extracted from the image photographed by the camera and movement of the object is detected by using the extracted feature points. Detection of object movement refers to detection of movement of the object to the left, right, up and down as well as a distance moved, detection of zoom-in and an enlargement rate, detection of zoom-out and a scale-down rate and detection of rotation of the object to the left, right, up and down as well as a rotation angle. If movement of the object is detected, a graphic signal displayed on a screen is moved, enlarged, scaled down or rotated in response to the detected movement of the object.

In one aspect of the present invention, a method for displaying an image on a display screen of a portable terminal is provided. The method includes tracking a reference object, determining changes in relative movement between the reference object and the portable terminal and altering the display of the image on the screen according to the determined changes in relative movement, the image not associated with the reference object.

It is contemplated that the image is either stored in the portable terminal or downloaded from an entity outside the portable terminal. It is further contemplated that determining changes in relative movement includes creating a current reference image of the reference object, extracting at least one feature point from the current reference image and comparing at least one feature point of a previous reference image with the extracted at least one feature point of the current reference image.

It is contemplated that determining changes in relative movement further includes determining a direction in which the photographed reference object has moved and a distance by which the photographed reference object has moved, a direction in which the photographed reference object has rotated and an angle of rotation of the photographed reference object, that the photographed reference object is closer to the portable terminal and an enlargement rate of the current reference image and/or that the photographed reference object is farther away from the portable terminal and a reduction rate of the current reference image. It is further contemplated that altering the display of the image on the screen includes moving the image on the display screen as much as the determined distance by which the photographed reference object has moved and moving the image on the display screen according to the determined direction in which the photographed reference object has moved.

It is contemplated that altering the display of the image on the screen includes either enlarging the image on the display screen or reducing the image on the display screen according to either the determined enlargement rate of the current reference image or the determined reduction rate of the current reference image. It is further contemplated that altering the display of the image on the screen includes, if a camera that photographed the reference object and the display screen are on the same planar surface of the portable terminal, enlarging the image on the display screen according to the determined enlargement rate of the current reference image if it is determined that that the photographed reference object is closer to the portable terminal and reducing the image on the display screen according to the determined reduction rate of the current reference image if it is determined that the photographed reference object is farther away from the portable terminal and, if the camera that photographed the reference object and the display screen are on opposite planar surfaces of the portable terminal, reducing the image on the display screen according to the determined enlargement rate of the current reference image if it is determined that that the photographed reference object is closer to the portable terminal and enlarging the image on the display screen according to the determined reduction rate of the current reference image if it is determined that the photographed reference object is farther away from the portable terminal.

It is contemplated that altering the display of the image on the screen includes rotating the image in either the same direction as the determined direction in which the photographed reference object has rotated or in the opposite direction as the determined direction in which the photographed reference object has rotated, the image rotated according to the determined angle of rotation of the photographed reference object. It is further contemplated that altering the display of the image on the screen includes rotating the image in the same direction as the determined direction in which the photographed reference object has rotated if a camera that photographed the reference object and the display screen are on the same planar surface of the portable terminal and rotating the image in the opposite direction as the determined direction in which the photographed reference object has rotated if the camera that photographed the reference object and the display screen are on opposite planar surfaces of the portable terminal. Preferably, the image is a 3-dimensional image that is rotated on the screen according to the determined changes in relative movement.

In another aspect of the present invention, a method for displaying an image on a display screen of a portable terminal is provided. The method includes tracking the movement of a user's face by photographing and creating a current reference image of the face, determining changes in movement of the user's face by extracting at least one feature point from the current reference image of the user's face and comparing at least one feature point of a previous reference image of the user's face with the extracted at least one feature point of the current reference image of the user's face and altering the display of the image on the screen according to the determined changes in movement of the user's face, wherein the displayed image not associated with the user's face. It is contemplated that determining changes in movement of the user's face includes extracting at least one feature point corresponding to either the user's eyes, the user's nose or the user's mouth.

In another aspect of the present invention, an apparatus for displaying an image on a display screen of a portable terminal is provided. The apparatus includes a tracking unit adapted to track a reference object, a graphic unit adapted to display the image on the display screen, the image not associated with the reference object, a detector unit adapted to determine changes in relative movement between the reference object and the portable terminal and a controller adapted to control the graphic unit such that the display of the image on the screen is altered according to the determined changes in relative movement.

It is contemplated that the graphic unit is further adapted to display either an image of stored in the portable terminal or an image downloaded from an entity outside the portable terminal. It is further contemplated that the tracking unit includes a camera and is further adapted to photograph the reference object and create a current reference image of the reference object.

It is contemplated that the detector is further adapted to extract at least one feature point from the current reference image and compare at least one feature point of a previous reference image with the extracted at least one feature point of the current reference image in order to determine changes in relative movement between the reference object and the portable terminal. It is further contemplated that the detector is further adapted to determine a direction in which the photographed reference object has moved and a distance by which the photographed reference object has moved, a direction in which the photographed reference object has rotated and an angle of rotation of the photographed reference object, that the photographed reference object is closer to the portable terminal and an enlargement rate of the current reference image and/or that the photographed reference object is farther away from the portable terminal and a reduction rate of the current reference image.

It is contemplated that the controller is further adapted to control the graphic unit to move the image on the display screen as much as the determined distance by which the photographed reference object has moved and move the image on the display screen according to the determined direction in which the photographed reference object has moved. It is further contemplated that the controller is further adapted to control the graphic unit to either enlarge the image on the display screen or reduce the image on the display screen according to either the determined enlargement rate of the current reference image or the determined reduction rate of the current reference image. Preferably, the controller is further adapted to control the graphic unit to rotate the image in either the same direction as the determined direction in which the photographed reference object has rotated or in the opposite direction as the determined direction in which the photographed reference object has rotated, the image rotated according to the determined angle of rotation of the photographed reference object.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed. These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.
- FIG. 1: is a block diagram illustrating a structure of a display apparatus according to the present invention.
- FIG. 2: is a flowchart illustrating a display method according to the present invention.
- FIG. 3: is a flowchart illustrating a method for determining movement of an object according to the present invention.
- FIG. 4: is a flowchart illustrating a method for displaying a graphic signal on a screen in response to the movement of an object according to the present invention.

### DETAILED DESCRIPTION OF THE PREFERRED EMBODIMENTS

The present invention relates to a method and apparatus for automatically moving a graphic signal displayed on the screen of a hand-held terminal to the left, right, up or down. Although the present invention is illustrated with respect to a hand-held terminal, it is contemplated that the present invention may be utilized anytime it is desired to automatically move a graphic image on a display device.

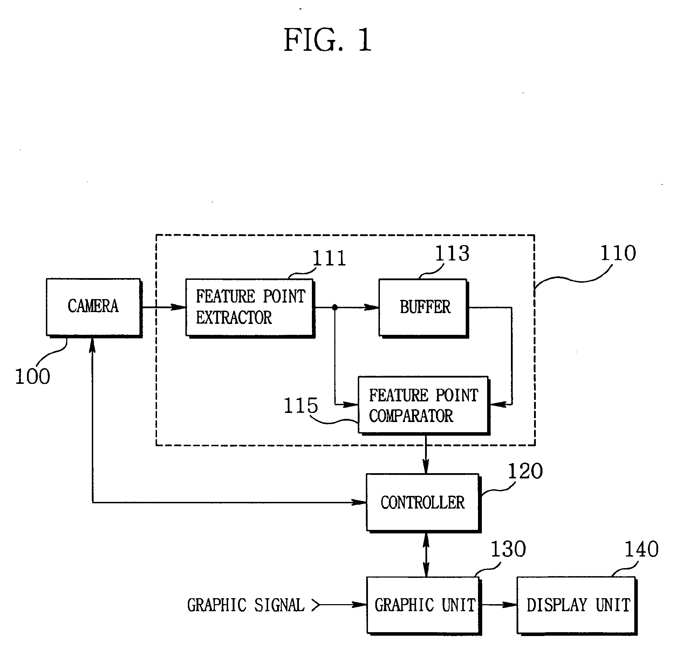

FIG. 1 is a block diagram illustrating a structure of a display apparatus according to the present invention. A camera 100 is integrally mounted in a hand-held terminal and photographs an object. It is assumed in the present invention that the camera 100 is arranged on the same planar surface as a screen mounted in the hand-held terminal.

A movement detector detects movement of an object photographed by the camera 100. The movement detector 110 includes a feature point extractor 111, a buffer 113 and a feature point comparator 115.

The feature point extractor 111 extracts a plurality of feature points from an image of an object photographed by the camera 100. For example, if an object photographed by the camera 100 is a man's face, the feature point extractor 111 may extract feature points related to the eyes, nose and mouth of the man's face. Furthermore, if the object photographed by the camera 100 is not a man's face but another object, feature points of the object such as corner portions or portions where bright and dark sides are strikingly evident may be extracted.

The buffer 113 stores feature points of an image extracted by the feature point extractor 111. The feature point comparator 115 compares feature points of a previous image stored in the buffer 113 with positions of feature points of a current image extracted by the feature point extractor 111 and determines movement of the object according to the comparison result.

In other words, the feature point comparator 115 compares feature points of a previous image with those of the current image to determine movement direction and movement distance of an object, zoom-in and enlargement rate of the object, zoom-out and scale-down rate of the object, and rotation direction and rotation distance of the object. The movement determined by the feature point comparator 115 corresponds to that of the camera 100 such that feature points of the previous image and those of the current image may be compared to determine movement direction and movement distance of the camera 100, zoom-in and enlargement rate of the camera 100, zoom-out and scale-down rate of the camera 100, and rotation direction and rotation distance of the camera 100.

A controller 120 controls camera 100 to photograph an object. The controller 120 controls the display of a graphic signal on a screen according to movement of the object determined by the feature point comparator 115 of the movement detector 110. For example, the controller 120 controls the display of the graphic signal by moving, enlarging, scaling down or rotating the graphic signal according to the movement direction and movement distance of the object as well as zoom-in and enlargement rate, zoom-out and scale-down rate, and rotation direction and rotation distance of the object determined by the feature point comparator 115.

A graphic unit 130 graphically processes various graphic signals including 3-D images, games and web texts stored inside the hand-held terminal or downloaded via the Internet and outputs the signals to the display unit 140 for display on the screen. Furthermore, the graphic unit 130 moves, enlarges, scales down or rotates the graphic signals displayed on the screen of the display unit 140 and displays the graphic signals on the screen.

The graphic unit 130 processes the graphic signals stored inside the hand-held terminal. The graphic unit 130 may also process graphic signals received from outside the hand-held terminal.

Processing graphic signals includes enlargement or scale-down to conform to a size of a screen of the display unit 140 and processing appropriate to resolution of the screen. The graphic signals processed by the graphic unit 130 are output to the display unit 130 and displayed on the screen.

While the predetermined graphic signal is displayed on the screen, the controller 120 drives the camera 100. The camera 100 photographs an object under control of the controller 120 and outputs an image of the photographed object to the feature point extractor 111 of the movement detector 110.

The feature point extractor 111 extracts feature points from the image of the object. For example, if the object is a man's face, feature points corresponding to the eyes, nose and mouth may be extracted. If an object other than a face is photographed, feature points of the object such as corner portions or portions where bright and dark sides are strikingly distinguished may be extracted. Since the extraction of feature points of an object is a well-known art, a detailed description is omitted here.

The feature points extracted by the feature point extractor 111 are stored in the buffer 113 and the feature point extractor 111 repeatedly extracts feature points of successive images. The buffer 113 stores feature points of a previous image photographed by the camera 100 and the feature point extractor 111 then extracts feature points of a current image photographed by the camera 100.

The feature points of the previous image stored in the buffer 113 and the feature points of the current image extracted by the feature point extractor 111 are input to the feature point comparator 115. The feature point comparator 115 compares positions of the feature points of the previous image input from the buffer 113 with positions of the feature points of the current image from the feature point extractor 111. Furthermore, the feature point extractor 111 detects position changes of the feature points as a result of the comparison and inputs the detected changes to the controller 120.

For example, if a user holds a hand-held terminal and moves the terminal to the left or to the right, the object photographed by the camera 100 is moved to the left or to the right to move the feature points to the left or to the right. If the feature points are moved to the left or to the right, the feature point comparator 115 determines that the object has moved to the left or to the right and detects a distance moved to the left or to the right.

If the hand-held terminal is moved up or down, the object photographed by the camera 100 is moved up or down to move the feature points up or down. The feature point comparator 115 determines that the object has moved up or down if the feature points are moved up or down, and detects a distance moved up or down.

If the hand-held terminal is advanced toward the object or the camera 100 is zoomed in, the object photographed by the camera 100 is enlarged to entirely expand gaps between the feature points. If the gaps between the feature points are entirely expanded, the feature point comparator 115 determines that zoom-in of the object has occurred and detects an enlargement rate of the object.

If the hand-held terminal is moved away from the object or the camera 100 is zoomed out, the object photographed by the camera 100 is scaled down to reduce the gaps between the feature points. The feature point comparator 115 determines that zoom-out of the object has occurred and detects a scale-down rate of the object.

If the hand-held terminal is rotated horizontally, there are no vertical width changes of the feature points, only horizontal width changes. Furthermore, a difference between the horizontal width changes of the feature points located in the left side and the horizontal width changes of the feature points located in the right side results and is based on the feature points located in the middle according to horizontal rotation of the hand-held terminal. The feature point comparator 115 determines a horizontal rotation direction based on the horizontal width changes of the left feature points and the horizontal width changes of the right feature points and detects a rotation angle if there are horizontal width changes of the feature points.

If the hand-held terminal is rotated vertically, there are only vertical width changes of the feature points, but no horizontal width changes. Furthermore, a difference between the vertical width changes of the feature points located in the upper side and the vertical width changes of the feature points located in the lower side results and is based on the feature points located in the middle according to vertical rotation of the hand-held terminal. The feature point comparator 115 determines a vertical rotation direction based on the vertical width changes of the upper feature points and the vertical width changes of the lower feature points and detects a rotation angle if there are vertical width changes of the feature points.

The movement of the object determined by the feature point comparator 115, for example, the movement of the camera, is input to the controller 120. The controller 120 controls the graphic unit 130 in response to the movement of the object determined by the feature point comparator 115 such that the graphic unit 130 scrolls, zooms in, zooms out or rotates the graphic signal in response to the movement of the object and displays the graphic signal on the screen of the display unit 140.

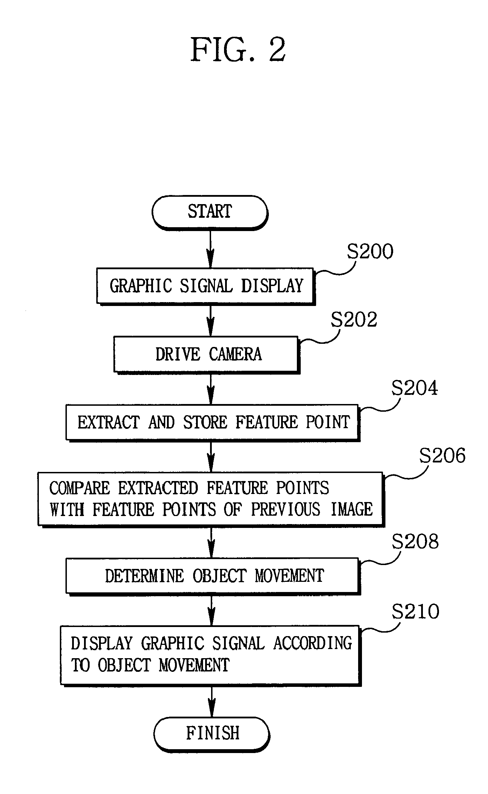

FIG. 2 is a flowchart illustrating a display method according to the present invention. Referring to FIG. 2, a graphic signal stored in the hand-held terminal or downloaded from outside the terminal is input and processed by the graphic unit 130 and is displayed on the screen of the display unit 140 (S200).

The graphic signal may be input in response to a user's manipulation. For example, various graphic signals may be input, the signals including web texts downloaded from the Internet to the hand-held terminal, 3-D images, games or digital photographs taken by a user with a camera and stored in the hand-held terminal.

If the graphic signal is displayed on the screen of the display unit 140 by the graphic unit 130, the controller 120 controls the camera 100 to photograph an object (S202). The object photographed by the camera 100 is not limited to a specific object, but may be any object from which feature points may be extracted from the photographed image.

An image of the photographed object is input to the feature point extractor 111. The feature point extractor 111 extracts feature points from the input image of the object and the extracted feature points are repeatedly stored in the buffer 113 as the image of the object is input (S204). Successively, feature points of a previous image photographed by the camera 100 are stored in the buffer 113 and feature points of a current image photographed by the camera are stored in feature point extractor 111.

The feature point comparator 115 compares the feature points of the previous image stored in the buffer 113 with the feature points of the current image output from the feature point extractor 111 (S206). The feature point comparator 115 determines movement of the object photographed by the camera 100 based on the comparison of the feature points (S208) and outputs a signal to the controller 120 based on the determined movement.

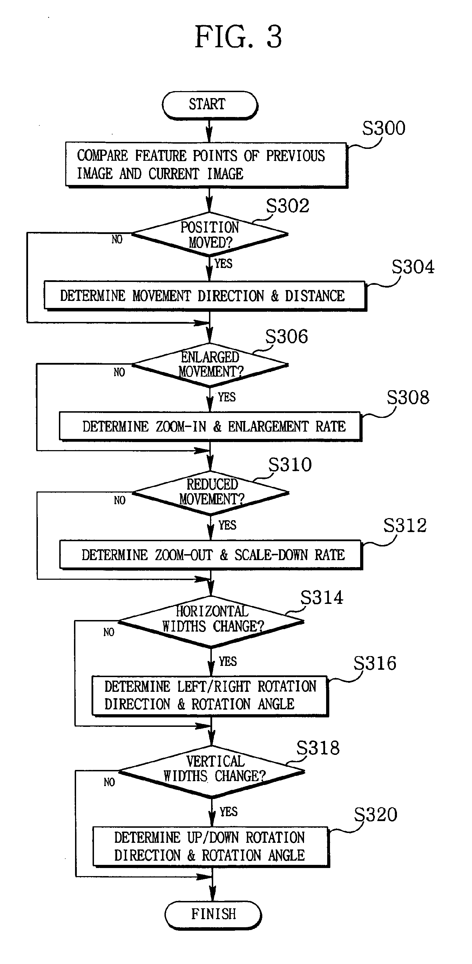

The controller 120 determines object movement, for example, movement of the camera, based on the signal output from the feature point comparator 115 and controls the graphic unit 130 in response to the determined movement in order to move the graphic signal displayed on the screen of the display unit 140 (S210). As illustrated in FIG. 3, the determination of object movement (S208) is conducted in such a manner that the feature point comparator 115 compares positions of the feature points of the previous image stored in the buffer 130 with the positions of the feature points of the current image output by the feature point extractor 111 (S300).

If it is determined that the position of the feature points has moved (S302), the feature point comparator 115 determines a direction in which the feature points have moved and a distance moved (S304). If it is determined that the positions of the feature points have increased (S306), the feature point comparator 115 determines that zoom-in has occurred and determines an enlargement rate based on the zoom-in (S308). If it is determined that the positions of the feature points have reduced (S310), the feature point comparator 115 determines that zoom-out has occurred and determines a scale-down rate based on the zoom-out (S312).

If it is determined that there are horizontal width changes of the feature points (S314), the feature point comparator 115 determines a left rotation or a right rotation of the object and a rotation angle based on the horizontal width changes of the feature points located on the left side and horizontal width changes of the feature points located on the right side relative to the horizontal rotation of the object (S316). If it is determined that there are vertical width changes of the feature points (S318), the feature point comparator 115 determines an upper rotation or a lower rotation of the object and a rotation angle based on the vertical width changes of the feature points located on the upper side and vertical width changes of the feature points located on the lower side relative to the vertical rotation of the object (S320).

As described above, object movement, for example, the movement of the camera 100 as determined by the feature point comparator 115 is input to the controller 120. The controller 120 controls the graphic unit 130 in response to the determined object movement in order to adjust the display of the graphic signal.

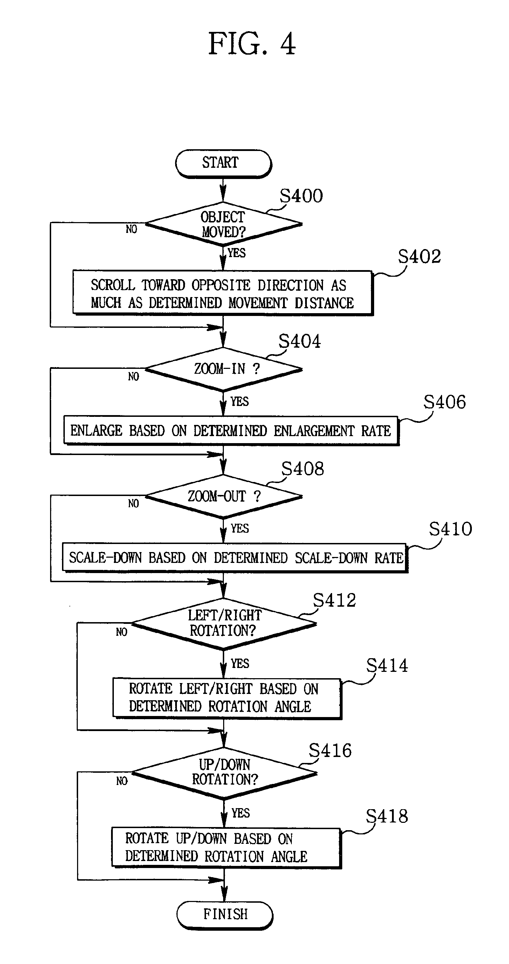

Referring again to FIG. 2, the display of the graphic signal (S210) is implemented such that the controller 120 controls the graphic unit 130 in response to the movement determined by the feature point comparator 115 in order to control the display of the graphic signal. In other words, and as illustrated in FIG. 4, if the feature point comparator 115 determines object movement (S400), the controller 120 controls the graphic signal displayed on the screen of the display unit 140 by the graphic unit 130 such that the display of graphic signal scrolled as much as the determined distance that the object has moved and in the opposite direction of the determined object movement (S402).

For example, if the object photographed by the camera 100 is moved in the upper direction, the graphic signal displayed on the screen is scrolled downward so that the upper portion of the graphic signal is displayed on the screen. If the object is moved in the downward direction, the graphic signal displayed on the screen is scrolled upward so that the lower portion of the graphic signal is displayed on the screen. If the object is moved to the left, the graphic signal displayed on the screen is scrolled to the right such that the left portion of the graphic signal is displayed on the screen. If the object is moved to the right, the graphic signal displayed on the screen is scrolled to the left such that the right portion of the graphic signal is displayed on the screen.

If the feature point comparator 115 determines that the object has been zoomed in (S404), the controller 120 enlarges the graphic signal displayed on the screen by the graphic unit 130 as much as the enlargement rate of the object (S406). If the feature point comparator 115 determines that the object has zoomed out (S408), the controller 120 reduces the graphic signal displayed on the screen by the graphic unit 130 as much as the scale-down rate of the object (S410).

If the feature point comparator 115 determines that the object has rotated horizontally (S412), the controller 120 controls the graphic unit 130 to display the graphic signal on the screen in a horizontally rotated direction as much as the rotation angle of the object (S414). If the feature point comparator 115 determines that the object has rotated vertically (S416), the controller 120 controls the graphic unit 130 to display the graphic signal on the screen in a vertically rotated direction as much as the rotation angle of the object (S418).

It should be noted that the present invention has described with regard to a hand-held terminal where the screen and the camera 100 are positioned on the same planar surface. Accordingly, as described herein, the graphic signal displayed on the screen is moved according to the camera and the screen installed on the same planar surface.

However, the camera may be rotated on a hand-held terminal or the camera may be disposed on an opposite surface from that of the screen. If the screen and the camera 100 are mounted on opposite planar surfaces, the graphic signal is moved in the opposite fashion as described herein.

For example, the graphic signal is scrolled as much as the movement distance and in the same direction as the direction of object movement. If the object has been zoomed in, the graphic signal is displayed in enlarged form as much as the enlargement rate and if the object has been zoomed out, the graphic signal is displayed in reduced form as much the scaled-down rate. If the photographed object has rotated to the left, the graphic signal is rotated to the right for display and if the object has rotated to the right, the graphic signal is rotated to the left for display. If the object has rotated upward, the graphic signal is rotated downward for display and if the object has rotated downward, the graphic signal is rotated upward for display.

As apparent from the foregoing, if a graphic signal is displayed on a screen in a hand-held terminal integrally equipped with a camera according to the present invention, movement of an object photographed by the camera is detected, the graphic signal displayed on the screen is automatically scrolled, zoomed in, zoomed out, rotated, or vertically or horizontally moved according to the movement of the detected object. Furthermore, if a 3-D graphic signal is displayed on the screen, the 3-D graphic signal is rotated for display in response to rotation of an object photographed by the camera as a user holds the hand-held terminal.

Accordingly, the graphic signal display apparatus and method for hand-held terminal according to the present invention has an advantage in that user inconvenience is reduced and there is no need to constantly adjust a graphic signal using a key pad or a stylus if a display size of the graphic signal is larger than that of a screen. Another advantage of the present invention is that a 3-D graphic signal can be rotated and viewed according to the movement of a photographed object without requiring a separate manipulation by a user if the 3-D graphic signal is to be displayed.

What has been described above includes examples of the present invention. It is, of course, not possible to describe every conceivable combination of components or methodologies for purposes of describing the present invention, but one of ordinary skill in the art can recognize that many further combinations and permutations of the present invention are possible.

Accordingly, the present invention is intended to embrace all such alterations, modifications and variations that fall within the spirit and scope of the appended claims. Furthermore, to the extent that the term "includes" is ever used in either the detailed description or the claims, such term is intended to be inclusive in a manner similar to the term "comprising" as "comprising" is interpreted when employed as a transitional word in a claim.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims. Therefore, all changes and modifications that fall within the metes and bounds of the claims, or equivalence of such metes and bounds are therefore intended to be embraced by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for displaying an image on a display screen of a portable terminal, the method comprising:
tracking a reference object;
determining changes in relative movement between the reference object and the portable terminal; and
altering the display of the image on the screen according to the determined changes in relative movement, the image not associated with the reference object.

2. The method of claim 1, wherein the image is one of stored in the portable terminal and downloaded from an entity outside the portable terminal.

3. The method of claim 1, wherein determining changes in relative movement comprises:
creating a current reference image of the reference object;
extracting at least one feature point from the current reference image; and
comparing at least one feature point of a previous reference image with the extracted at least one feature point of the current reference image.

4. The method of claim 3, wherein determining changes in relative movement further comprises determining at least one of:
a direction in which the photographed reference object has moved and a distance by which the photographed reference object has moved;
a direction in which the photographed reference object has rotated and an angle of rotation of the photographed reference object;
that the photographed reference object is closer to the portable terminal and an enlargement rate of the current reference image; and
that the photographed reference object is farther away from the portable terminal and a reduction rate of the current reference image.

5. The method of claim 4, wherein altering the display of the image on the screen comprises:
moving the image on the display screen as much as the determined distance by which the photographed reference object has moved; and
moving the image on the display screen according to the determined direction in which the photographed reference object has moved.

6. The method of claim 4, wherein altering the display of the image on the screen comprises one of enlarging the image on the display screen and reducing the image on the display screen according to one of the determined enlargement rate of the current reference image and the determined reduction rate of the current reference image.

7. The method of claim 6, wherein altering the display of the image on the screen comprises:
if a camera that photographed the reference object and the display screen are on the same planar surface of the portable terminal, enlarging the image on the display screen according to the determined enlargement rate of the current reference image if it is determined that that the photographed reference object is closer to the portable terminal and reducing the image on the display screen according to the determined reduction rate of the current reference image if it is determined that the photographed reference object is farther away from the portable terminal; and
if the camera that photographed the reference object and the display screen are on opposite planar surfaces of the portable terminal, reducing the image on the display screen according to the determined enlargement rate of the current reference image if it is determined that that the photographed reference object is closer to the portable terminal and enlarging the image on the display screen according to the determined reduction rate of the current reference image if it is determined that the photographed reference object is farther away from the portable terminal.

8. The method of claim 4, wherein altering the display of the image on the screen comprises rotating the image in one of the same direction as the determined direction in which the photographed reference object has rotated and in the opposite direction as the determined direction in which the photographed reference object has rotated, the image rotated according to the determined angle of rotation of the photographed reference object.

9. The method of claim 8, wherein altering the display of the image on the screen comprises rotating the image in the same direction as the determined direction in which the photographed reference object has rotated if a camera that photographed the reference object and the display screen are on the same planar surface of the portable terminal and rotating the image in the opposite direction as the determined direction in which the photographed reference object has rotated if the camera that photographed the reference object and the display screen are on opposite planar surfaces of the portable terminal.

10. The method of claim 1, wherein the image is a 3-dimensional image that is rotated on the screen according to the determined changes in relative movement.

11. A method for displaying an image on a display screen of a portable terminal, the method comprising:
tracking the movement of a user's face by photographing and creating a current reference image of the face;
determining changes in movement of the user's face by extracting at least one feature point from the current reference image of the user's face and comparing at least one feature point of a previous reference image of the user's face with the extracted at least one feature point of the current reference image of the user's face; and
altering the display of the image on the screen according to the determined changes in movement of the user's face,
wherein the displayed image not associated with the user's face.

12. The method of claim 11, wherein determining changes in movement of the user's face comprises extracting at least one feature point corresponding to one of the user's eyes, the user's nose and the user's mouth.

13. An apparatus for displaying an image on a display screen of a portable terminal, the apparatus comprising:
a tracking unit adapted to track a reference object;
a graphic unit adapted to display the image on the display screen, the image not associated with the reference object;
a detector unit adapted to determine changes in relative movement between the reference object and the portable terminal; and
a controller adapted to control the graphic unit such that the display of the image on the screen is altered according to the determined changes in relative movement.

14. The apparatus of claim 13, wherein the graphic unit is further adapted to display one of an image of stored in the portable terminal and an image downloaded from an entity outside the portable terminal.

15. The apparatus of claim 13, wherein the tracking unit comprises a camera and is further adapted to:
photograph the reference object; and
create a current reference image of the reference object.

16. The apparatus of claim 15, wherein the detector is further adapted to:
extract at least one feature point from the current reference image; and
compare at least one feature point of a previous reference image with the extracted at least one feature point of the current reference image in order to determine changes in relative movement between the reference object and the portable terminal.

17. The apparatus of claim 16, wherein the detector is further adapted to determine at least one of:
a direction in which the photographed reference object has moved and a distance by which the photographed r object has moved;
a direction in which the photographed reference object has rotated and an angle of rotation of the photographed reference object;
that the photographed reference object is closer to the portable terminal and an enlargement rate of the current reference image; and
that the photographed reference object is farther away from the portable terminal and a reduction rate of the current reference image.

18. The apparatus of claim 17, wherein the controller is further adapted to control the graphic unit to:
move the image on the display screen as much as the determined distance by which the photographed reference object has moved; and
move the image on the display screen according to the determined direction in which the photographed reference object has moved.

19. The apparatus of claim 17, wherein the controller is further adapted to control the graphic unit to one of enlarge the image on the display screen and reduce the image on the display screen according to one of the determined enlargement rate of the current reference image and the determined reduction rate of the current reference image.

20. The apparatus of claim 17, wherein the controller is further adapted to control the graphic unit to rotate the image in one of the same direction as the determined direction in which the photographed reference object has rotated and in the opposite direction as the determined direction in which the photographed reference object has rotated, the image rotated according to the determined angle of rotation of the photographed reference object.
